# EUROPEAN PATENT APPLICATION

(11) **EP 1 704 904 A1**
(43) Date of publication of application: **27.09.2006**
(21) Application number: 06425186.1
(22) Date of filing: 21.03.2006
(51) Int. Cl.: A63H 5/00, A63H 33/00

(54) **Popping mat**

(30) Priority: 22.03.2005 IT RM20050134
(71) Applicant: IS Pack S.r.l., 00043 Ciampino (Roma) (IT)
(72) Inventor: De Amicis, Maurizio, 00043 Ciampino (Roma) (IT)
(74) Representative: Perrotta, Luciana

(57) **Abstract**

A popping mat constituted by three layers; the base layer which touches the floor and the other layers which are coloured and formed by bubbles of air.

It is basically a toy, since it may be used by children who, whilst playing a particular game with the mat, make a popping noise.

The invention falls within the field of human needs and may be applied in the manufacture of toys and in the manufacture of alarm systems.

## Description

The invention concerns a mat built in such a way that, when it is walked on, it produces small popping noises. As a result of this property, it may be used both in the games sector and in the antitheft sector.

The invention falls within the field of human needs and may be applied in the manufacture of toys and in the manufacture of alarm systems.

In short, the invention consists in a sheet made in such a way that a part rests on the floor, whilst the overlying part, which is glued to the part which rests on the floor, is formed by semi-spherical elements filled with air. The latter elements, when they are pressed, make a popping noise which may either be fun for children to play with or useful as a warning signalling the presence of an intruder, if the mat is used as an alarm.

The invention may be compared with the "bubble wrap" made in a similar way and used in the wrapping sector, but it should be clarified immediately that the structure of the present invention is substantially different. Indeed, the material in the prior art is formed by a layer of polythene which is hot-glued to another layer that is transformed into a myriad of air bubbles which constitute an air space, to protect the wrapped object from impact, vibrations, etc., whilst the constitution of the present invention is different to the prior art due to a different structure, as will be explained below.

Summing up, with respect to the prior art the present invention is different in the following two aspects:
- different manufacturing structure;
- different final use.

As known, in the current use for wrapping, the air bubbles are structured as such and must have a suitable consistency to protect the objects from damage, since a lack of strength would adversely affect the usefulness. On the contrary, in the case of the present invention, the use is just the opposite since it is precisely the popping of the bubbles, in a calibrated manner, which leads to the enjoyment. Indeed, the performance of the games, which would be duly registered with SIAE, consists in the fact that the child who manages to pop all the bubbles wins the game.

The term "calibrated" means that, during manufacture, the film would be given various degrees of strength which would make the bubbles more or less strong, depending on the particular requirements.

The present invention is also attractive since one of the layers may be coloured, have various patterns and be printed with various playful designs, to draw the attention of the children. It may be manufactured in a wide range of shapes: square, rectangular, circular, etc, and with different sizes, from a few centimetres to several metres, e.g. in the form of a long, narrow mat - to be run and jump along noisily. The old game of "hopscotch" which in olden times was played by jumping along, gives the idea of a possible way of playing with the popping mat presented in the present invention.

The present invention is now described with reference to a form of its embodiment, which is currently preferred by the Inventor, and shown by way of a non-limiting example, on the basis of the attached drawings.

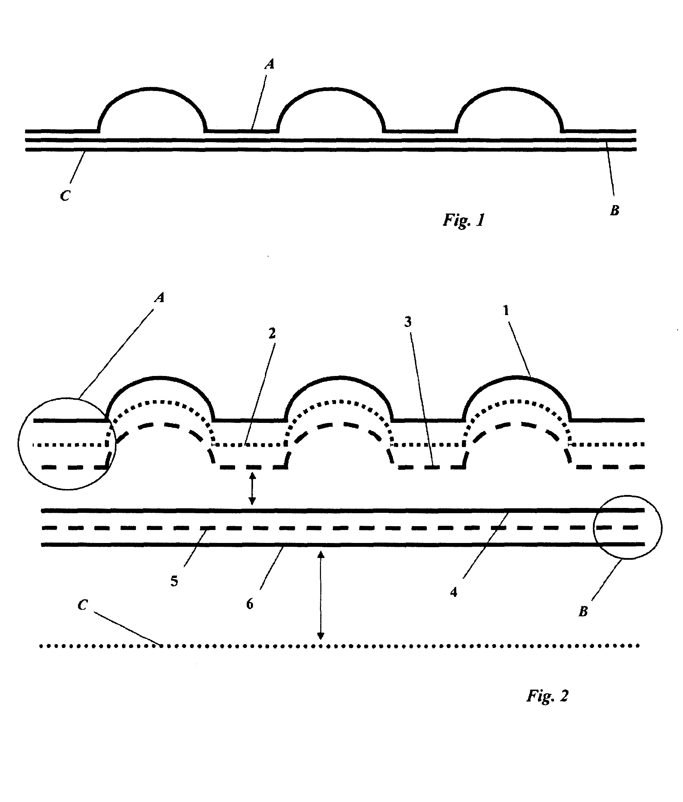

Fig. 1 Schematic representation of a section of the popping mat;
Fig. 2 Schematic representation of the upper and lower layers of the mat.

The popping mat is produced in the following manner using polythene sheets made according to the Inventor's instructions (i.e. purchased on the market, selecting the thickness and dimensions):
- the support layer of the mat is produced with non-slip characteristics (where non-slip means that the lower layer is treated with special additives, available on the market) for the part which comes into contact with the floor and the upper part treated for printing;
- the printing is then carried out, preferably with eight colours showing the layout of the game and imaginative designs;
- then, the layer made in this way is joined, by means of a hot-gluing process, with a last layer formed by a myriad of bubbles. This layer is made from a high-stability, coextruded material, the inside of which has a barrier-layer which enable the above-mentioned calibrated popping.

With reference to the Figures, the material constituting the mat consists of the following polythene layers, prepared for printing, printed and non-slip treated:
- a film A coextruded and pre-formed with bubbles full of air made of non-inflammable material;
- a film B coextruded which constitutes the support;
- a film C which forms a coloured and non-slip base, if required.

Film A, which is to form the bubbles, fire-retardant, is a coextruded polythene material, particularly elastic and graduated with a variable resistance to pressure, so that the bubbles do not deflate when first touched, but which offer, before popping, a good resistance and an increase in noise, when they pop. Film A is constituted by a coloured layer 1, a barrier layer 2 and a high-weldability layer 3.

These layers may be treated in order to emit a pleasant aroma.

Film B is constituted by coextruded layers: layers 4 and 6 with weldability characteristics; layer 5 with resistance characteristics.

Film C is printed, coloured and made non-slip.

If wished, layers 4, 5 and 6 may be treated to emit an aroma when they pop.

Due to the nature of the invention, it may also have, as already mentioned, a use in the antitheft field by placing the mat along access routes in order to signal the presence of any intruders.

## Claims

1. Popping mat, **characterised in that** it may be produced with the following procedure: the support layer of the mat is produced with non-slip characteristics for the part which comes into contact with the floor and the upper part treated for printing, then coloured designs are printed; this layer is then joined, by the hot-gluing process, to another layer formed by a myriad of bubbles.

2. Popping mat, in accordance with claim 1, **characterised in that** it is constituted by coextruded, high-stability, polythene inside which there is a barrier layer (2), being all the material non-toxic and fire-retardant.

3. Popping mat, in accordance with the previous claims, **characterised in that** it is constituted by a first film (A) constituted by three layers of which (1) is relative to the stability, shapeability, colouration; (2) calibrated strength; (3) high weldability; being said film pre-formed with air bubbles and by a second film (B) constituted by (4) high weldability glue; (5) strength; (6) weldable glue; being said two films joined to another film (C) prepared for printing and treated to be non-slip.

4. Popping mat, in accordance with the previous claims, **characterised in that** it may be used as an alarm of the presence of intruders.
